# EUROPEAN PATENT SPECIFICATION

(11) **EP 2 252 837 B1**
(45) Date of publication and mention of the grant of the patent: **02.09.2015**
(21) Application number: 09705141.1
(22) Date of filing: 26.01.2009
(51) Int. Cl.: F24H 8/00, F24H 3/08, F24D 12/02

(54) **IMPROVED HOT AIR UNIT HEATER**
VERBESSERTES HEISSLUFT HEIZGERÄT
UNITÉ DE CHAUFFAGE À AIR CHAUD AMÉLIORÉE

(30) Priority: 30.01.2008 IT MI20080034 U
(43) Date of publication of application: 24.11.2010
(73) Proprietor: TECNOCLIMA S.p.A., 38057 Pergine Valsugana (Trento) (IT)
(72) Inventor: VESCOVI, Alfonso, I-38068 Rovereto (Trento) (IT)
(74) Representative: Carloni, Franco
(86) International application number: PCT/IT2009/000018
(87) International publication number: WO 2009/095944

(56) References cited:
- US-A- 2 089 969
- US-A- 2 090 053
- US-A- 3 102 530
- US-A- 5 383 445

## Description

### Technical field

The present invention relates to the technical field of apparatus for heating systems and, in particular, concerns a hot air unit heater which operates either on gas or fuel oil and comprises means for producing heat and means for transferring the heat produced to the air.

### Background art

An apparatus of the aforementioned kind is known, for example, from published patent US 2 089 969 A, or from published patent application EP-A-1 563 231, in the name of the same applicant of the present application. In both these prior art documents there is disclosed a hot air unit heater comprising a combustion chamber, a liquid or gas fuel burner, an air-flue gas heat exchanger in connection with the combustion chamber, a fan group for causing a forced circulation of the flue gas and a fan group for causing a forced circulation of the air to be heated. Document US 2089989 A discloses the preamble of claim 1.

The heat exchanging elements of this known apparatus are of the tube bundle type with inversion of the combustion gases, which assures, in nominal operating conditions of the apparatus, a heat efficiency of the order of 75-80%, by transferring to the air a large quantity of the available heat of the combustion gases. Until the fuels used for heating with the apparatus of the kind mentioned above were available in large quantities and at a relatively low cost, such efficiency values were generally considered satisfactory, even though an important portion of the heat available from the combustion gases was discharged into the ambient atmosphere in the form of hot exhaust gas through a flue tube of the apparatus.

However, the present shortage of heating fuels at low costs and the recent provisions by regulations in the field of apparatus for heating installations have placed emphasis on the need to produce low energy-consuming and more environmentally friendly unit heaters having improved means for regulating the heat produced. To this purpose, a method which has been proposed is to recover a portion of the latent heat of condensation of the combustion gases that otherwise would be lost in the ambient atmosphere. By this way, the efficiency of the heat exchanger of a hot air unit heater of the kind mentioned above can be greater than 90%; however, there is the drawback that in order to achieve the operation in condensation mode it is necessary to reduce the firing rate of the unit heater.

The object of the present invention is to obviate the above mentioned drawback of the hot air unit heaters of the kind known from documents EP-A-1 563 231 and US 2 089 969, so that the operation in condensation mode of the apparatus can be achieved at the maximum firing rate.

### Disclosure of the invention

According to the invention, this object is achieved by a hot air unit heater comprising a combustion chamber, a liquid or gas fuel burner, a flue gas-air heat exchanger in connection with the combustion chamber, a first fan unit for causing a forced circulation of the air to be heated, characterised in that said combustion chamber and said flue gas-air heat exchanger are arranged in parallel with respect to the flow direction of the air to be heated, and that a second fan unit, which is separate and independent from the first fan unit, is provided, said fan units being provided for causing a forced circulation of the air to be heated over the outer surface of said combustion chamber and over the outer surface of said flue gas-air heat exchanger, respectively.

### Brief description of drawings

The invention will be now described in more detail in connection with the following drawings, wherein:
Figures 1 and 2 are a front elevational view and a side elevational view, respectively, of a hot air unit heater according to the present invention,
Figure 3 is a cross-sectional view along line A-A of Figure 1, and
, Figure 4 is a cross-sectional view along line B-B of Figure 1.

### Preferred embodiment of the invention

With reference to the Figures of the drawings, there is shown a hot air unit heater according to the present invention, generally designated by 10. The unit comprises an outer shell 11 made of sheet metal, of which only a portion is depicted in order to show the interior of the unit. A lower horizontal partition 12, which is connected to the side walls of the outer shell 11 and is made as well of sheet metal, functionally subdivides the interior of the unit by forming, in the lower part of the same, a suction chamber 14 comprising a plurality of inlets 15 for the cold air. In the upper part of the unit there is formed a mixing chamber 16 provided with an outlet 17 for the hot air. A vertical panel 18 extends from the horizontal partition 12 and internally divides the central portion of the unit by forming a housing 19 for a combustion chamber 20 and a housing 21 for a heat exchanger 22, which are thus arranged side by side one another.

The combustion chamber 20 is made of a horizontally arranged cylindrical body having a substantially elliptical shaped cross-section with its greater axis arranged vertically. A burner 23 of conventional construction, preferably of the kind having a blower and means for varying and regulating the firing rate, extends horizontally inside of the combustion chamber. A connecting conduit 24, passing through the vertical panel 18, connects the interior of the combustion chamber 20 with an inlet manifold 25 of the heat exchanger 22. The heat exchanger 22 is formed of a first upper array of tubes 26 and a second lower array of tubes 27, which are connected one another by a flow-reversing chamber 28 arranged in a direction opposite to the flow direction of the air passing through the heat exchanger. The arrays of tubes 26 and 27 exhibit a cross-section which decreases along the flow direction of the combustion gases, in order to keep the velocity of the combustion gases constant while the temperature and volume thereof decreases, and further they slope in small degree downwards along the flow direction of the combustion gases in order to facilitate the down flow of the condensate resulting from the cooling of the combustion gases. At the outlet of the lower array of tubes 27 there is arranged an outlet manifold 29 of the heat exchanger 22 terminating with an exhaust opening 30 for the combustion gases. In the lower portions of the flow-reversing chamber 28 and of the outlet manifold 29 there is provided a condensate drain 31.

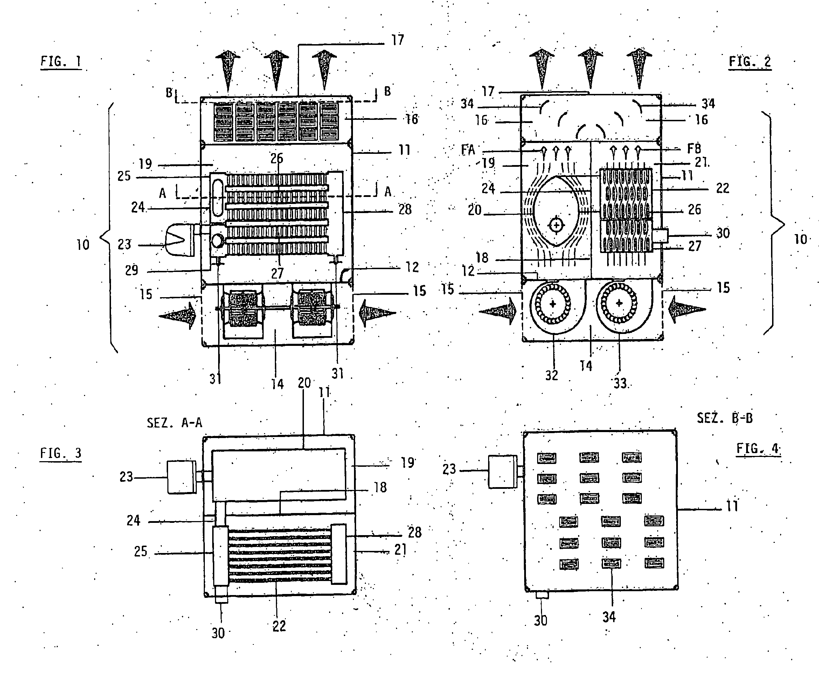

The suction chamber 14 and the mixing chamber 16 are in fluid communication with the housing 19 of the combustion chamber 20 and with the housing 21 of the heat exchanger 22, in order to permit the air to flow through the unit. As can be seen, in particular, in Figure 2 of the drawings, the air flow through the unit is composed of two parallel and separate flows FA and FB, which flow over the outer surfaces of the combustion chamber 20 and of the heat exchanger 22, respectively. The air flows FA and FB are produced by a first and a second fan unit 32 and 33, respectively, which are located in the suction chamber 14. According to a feature of the present invention, the fan units are structurally and operatively independent so that the volume of air that flows around the outer surfaces of the combustion chamber 20 and the heat exchanger 22 can be varied independently and differently. Suitably, the fan units 32 and 33 include a.c. electric motors controlled by variable frequency drives. The air flows FA and FB exiting the housing 19 of the combustion chamber and the housing 21 of the heat exchanger 22 are made to flow together into the mixing chamber 16 where they are mixed together. To this purpose, the mixing chamber 16 includes a plurality of baffles 34 which are arranged quincuncially (opposed one another and staggered) and are positioned at a height which increases with the distance from the central area of the mixing chamber.

With the configuration of the hot air unit heater disclosed above according to the present invention the following advantageous effects are achieved:
- The temperature of the combustion gases can be lowered to a value very near to the temperature of the inlet air to be heated, which temperature is in practice almost equal to the ambient air.
- The air stream that flows over the outside of the combustion chamber and the heat exchanger can be regulated independently and differently, with the effect that the rate of air flow is variable in a wide range and is adjustable to the different requirements of the combustion chamber and of the heat exchanger.
- The firing rate can be varied in a wide range depending on the actual heating requirements of the space to be heated.
- The total thermal exchange coefficient is increased, with the effect that the dimensions and the weight of the heat exchanger can be reduced.
- The condensate can be drained off without risk of stagnation.

## Claims

1. Hot air unit heater (10) comprising a combustion chamber (20), a liquid or gas fuel burner (23), a flue gas-air heat exchanger (22) in connection with the combustion chamber (23), a first fan unit (32) for causing a forced circulation of the air to be heated, wherein said combustion chamber (20) and said flue gas-air heat exchanger (22) are arranged in parallel with respect to the flow direction of the air to be heated, and a second fan unit (33), which is separate and independent from the first fan unit (32), is provided, **characterized in that** said fan units (32, 33) are provided for causing a forced circulation of the air to be heated over the outer surface of said combustion chamber (20) and over the outer surface of said flue gas-air heat exchanger (22), respectively.

2. Unit heater according to claim 1, **characterised in that** the heat exchanger (22) is formed of a first upper array of tubes (26) and a second lower array of tubes (27), said arrays of tubes (26, 27) being connected one another by a flow-reversing chamber (28) arranged in a direction opposite to the flow direction of the air passing through the heat exchanger (22) and exhibiting a cross-section which decreases along the flow direction of the combustion gases and being arranged to slope in small degree downwards along the flow direction of the combustion gases.

3. Unit heater according to claim 1, **characterised in that** the unit heater (10) comprises an outer shell (11) made of sheet metal and includes a horizontal partition (12) which is made as well of sheet metal and defines, in a lower part of the unit, a suction chamber (14).

4. Unit heater according to claim 1, **characterised in that** in an upper part of the unit there is provided a mixing chamber (16) with an outlet (17) for the hot air.

5. Unit heater according to claim 3, **characterised in that** the unit includes a vertical panel (18) extending centrally and forming, in a central portion of the unit, a housing (19) for the combustion chamber (20) and a housing (21) for the heat exchanger (22), which are thus arranged side by side one another.

6. Unit heater according to claim 1, **characterised in that** the combustion chamber (20) includes a burner (23) capable of varying and regulating the firing rate.

7. Unit heater according to claim 1, **characterised in that** the fan units (32, 33) include a.c. electric motors controlled by variable frequency drives.

## Patentansprüche

1. Heißluft-Heizgerät (10) umfassend eine Brennkammer (20), einen Flüssigkeits- oder Gaskraftstoffbrenner (23), einen mit der Brennkammer (23) verbunden Rauchgas-Luft-Wärmeaustauscher (22), eine erste Gebläseeinheit (32) zur Erzeugung einer erzwungenen Zirkulation der zu erwärmenden Luft, worin die genannten Brennkammer (20) und Rauchgas-Luft-Wärmeaustauscher (22) parallel zur Strömungsrichtung der zu erwärmenden Luft angeordnet sind, und eine von der ersten Gebläseeinheit (32) getrennt und unabhängig zweite Gebläseeinheit (33) vorgesehen ist, **dadurch gekennzeichnet, daß** die genannten Gebläseeinheiten (32, 33) zur Erzeugung einer erzwungenen Zirkulation der zu erwärmenden Luft, oberhalb der Außenfläche der Verbrennungskammer (20) und bzw. oberhalb der Außenfläche der Rauchgas-Luft-Wärmeaustauscher (22), vorgesehen sind.

2. Heißluft-Heizgerät nach Anspruch 1, **dadurch gekennzeichnet, daß** der Wärmeaustauscher (22) aus einer ersten oberen Reihe von Röhren (26) und einer zweiten unteren Reihe von Rohren (27) gebildet ist, wobei die genannten Reihen von Röhren (26, 27) durch eine Strömungs-Umkehrkammer (28) in einer Richtung entgegengesetzt zur Luftströmungsrichtung durch den Wärmeaustauscher (22) miteinander verbunden sind und einen Querschnitt aufweisen, der sich entlang der Strömungsrichtung der Verbrennungsgase verringert und mit Gefälle geringer Maße nach unten entlang der Strömungsrichtung der Verbrennungsgase angeordnet ist.

3. Heißluft-Heizgerät nach Anspruch 1, **dadurch gekennzeichnet, daß** das Heißluft-Heizgerät (10) eine aus Metallblech Außenschale (11) umfasst und eine horizontale Trennwand (12) enthält, die ebenso aus Metallblech ist und in einem unteren Teil des Heißluft-Heizgerät eine Saugkammer (14) definiert.

4. Heißluft-Heizgerät nach Anspruch 1, **dadurch gekennzeichnet, daß** in einem oberen Teil des Heißluft-Heizgerät eine Mischkammer (16) mit einem Heißluft-Auslaß (17) vorgesehen ist.

5. Heißluft-Heizgerät nach Anspruch 3, **dadurch gekennzeichnet, daß** das Heißluft-Heizgerät eine mittig verlaufende vertikale Platte (18) enthält, und ein Gehäuse für den Wärmeaustauscher in einem zentralen Abschnitt des Heißluft-Heizgerät bildet, die somit nebeneinander angeordnet sind.

6. Heißluft-Heizgerät nach Anspruch 1, **dadurch gekennzeichnet, daß** die Brennkammer (20) einen Brenner (23) enthält, der die Verbrennungsleistung verändern und steuern kann.

7. Heißluft-Heizgerät nach Anspruch 1, **dadurch gekennzeichnet, daß** die Gebläseeinheiten (32, 33) durch Frequenzumrichter gesteuerte Wechselstrommotoren umfassen.

## Revendications

1. Unité de chauffage à air chaud (10) comprenant une chambre de combustion (20), un brûleur à combustible liquide ou gazeux (23), un échangeur de chaleur gaz de combustion-air (22) en liaison avec la chambre de combustion (23), une première unité de ventilateur (32) pour provoquer une circulation forcée de l'air à chauffer, dans lequel ladite chambre de combustion (20) e ledit échangeur de chaleur gaz de combustion-air (22) sont disposés en parallèle par rapport à la direction d'écoulement de l'air à chauffer, et il est prévu une seconde unité de ventilateur (33), qui est séparée et indépendante de la première unité de ventilateur (32), **caractérisé en ce que** lesdites unités de ventilateur (32, 33) sont prévus pour provoquer une circulation forcée de l'air à chauffer au-dessus de la surface extérieure de ladite chambre de combustion (20) et sur la surface extérieure dudit échangeur de chaleur gaz de combustion-air (22), respectivement.

2. Unité de chauffage selon la revendication 1, caractérisé en que l'échangeur de chaleur (22) est formé d'un premier ensemble supérieur de tubes (26) et un second ensemble inférieur de tubes (27), lesdits ensemble de tubes (26, 27) sont reliés entre eux par une chambre d'écoulement d'inversion (28) disposé dans une direction opposée à la direction d'écoulement de l'air traversant l'échangeur de chaleur (22) et présentant une section transversale qui diminue le long de la direction d'écoulement des gaz de combustion et étant disposé à la pente dans un petit degré vers le bas le long de la direction d'écoulement des gaz de combustion.

3. Unité de chauffage selon la revendication 1, caractérisé en que le unité de chauffage (10) comprend une enveloppe extérieure (11) en tôle et comporte une cloison horizontale (12) qui est constitué aussi bien d'une tôle métallique et définit, dans une partie inférieure de l'unité, une chambre d'aspiration (14).

4. Unité de chauffage selon la revendication 1, **caractérisé en ce que** dans une partie supérieure de l'unité, il est prévu un chambre de mélange (16) avec une sortie (17) pour l'air chaud.

5. Unité de chauffage selon la revendication 3, **caractérisé en ce que** l'unité comprend un panneau vertical (18) passant au centre e formant, dans un partie centrale de l'unité, un boîtier (19) de la chambre de combustion (20) et un logement (21) pour l'échangeur de chaleur (22), qui sont ainsi disposés côte à côte les uns les autres.

6. Unité de chauffage selon la revendication 1, **caractérisé en ce que** la chambre de combustion (20) comprend un brûleur (23) capable de faire varier et réguler le taux de combustion.

7. Unité de chauffage selon la revendication 1, **caractérisé en ce que** les unités de ventilation (32, 33) comprennent moteurs électriques à courant alternatif commandés par des variateurs de fréquence.
